(19) Europäisches Patentamt
European Patent Office
Office européen des brevets

(11) EP 1 872 469 B1

(12) EUROPÄISCHE PATENTSCHRIFT

(45) Veröffentlichungstag und Bekanntmachung des Hinweises auf die Patenterteilung:
26.09.2018 Patentblatt 2018/39

(21) Anmeldenummer: 06707892.3

(22) Anmeldetag: 30.01.2006

(51) Int Cl.:
H02M 7/48 (2007.01)        H02M 1/00 (2006.01)
H02J 3/38 (2006.01)

(86) Internationale Anmeldenummer:
PCT/EP2006/050513

(87) Internationale Veröffentlichungsnummer:
WO 2006/111428 (26.10.2006 Gazette 2006/43)

(54) **VERFAHREN ZUM BETREIBEN EINES WECHSELRICHTERS MIT VORGESCHALTETEM HOCHSETZER SOWIE ZUGEHÖRIGE VORRICHTUNG**

METHOD FOR OPERATING AN INVERTER COMPRISING AN UPSTREAM STEP-UP DEVICE AND CORRESPONDING APPARATUS

PROCEDE POUR FAIRE FONCTIONNER UN ONDULEUR DE COURANT COMPRENANT UN ELEVATEUR CONNECTE EN AMONT ET DISPOSITIF CORRESPONDANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2005 DE 102005018596**

(43) Veröffentlichungstag der Anmeldung:
**02.01.2008 Patentblatt 2008/01**

(73) Patentinhaber: **Siemens Aktiengesellschaft 80333 München (DE)**

(72) Erfinder:
• **CESNAK, Lorand**
  **A-1050 Wien (AT)**
• **KERNSTOCK, Harald**
  **A-1070 Wien (AT)**
• **KOGARD, Markus**
  **A-2102 Hagenbrunn (AT)**

(74) Vertreter: **Maier, Daniel Oliver et al Siemens AG Postfach 22 16 34 80506 München (DE)**

(56) Entgegenhaltungen:
EP-A- 0 947 904        US-A1- 2004 151 011
US-A1- 2004 165 408        US-A1- 2004 207 366

• **PATENT ABSTRACTS OF JAPAN Bd. 014, Nr. 507 (E-0998), 6. November 1990 (1990-11-06) & JP 02 211055 A (HITACHI METALS LTD), 22. August 1990 (1990-08-22)**

EP 1 872 469 B1

## Beschreibung

Die Erfindung betrifft ein Verfahren zum Betreiben eines Wechselrichters mit einem über einen Zwischenkreis vorgeschalteten Hochsetzer gemäß Anspruch 1 und einer Anordnung mit einem Wechselrichter mit einem über einen Zwischenkreis vorgeschalteten Hochsetzer gemäß Anspruch 4. Vorteilhafte Ausführungsformen sind in den abhängigen Ansprüchen definiert.

Verfahren mit Wechselrichtern und vorgeschaltetem Hochsetzer kommen dort zum Einsatz, wo niedrige Gleichspannungen in höhere Wechselspannungen umgewandelt werden. Der Hochsetzer regelt dabei den Ausgangsstrom der Gleichstromquelle und liefert als Zwischenkreisspannung eine Gleichspannung, die vom Wechselrichter in eine Wechselspannung umgeformt und an eine Last oder an ein Wechselstromnetz abgegeben wird. Dabei wird durch den Wechselrichter die Zwischenkreisspannung geregelt.

Derartige Verfahren werden beispielsweise für den Anschluss von Photovoltaikzellen, Brennstoffzellen und ähnlichen Gleichstromquellen mit sich ändernder Entnahmestromvorgabe an eine Last oder ein Wechselstromnetz eingesetzt. Als Entnahmestromvorgabe ist dabei der Entnahmestrom zu verstehen, der z.B. von einer internen Regelung der Gleichstromquelle vorgegeben wird, um die von der Gleichstromquelle zur Verfügung gestellte Energie abzuführen. Solche Gleichstromquellen weisen in der Regel eine stromabhängige Spannungskennlinie auf. Durch äußere Einflüsse, beispielsweise sich verändernde Lichtverhältnisse bei Photovoltaikzellen, kann es dazu kommen, dass sich der Entnahmestrom ändert. Die Regelung des Wechselrichters und des Hochsetzers müssen derartige dynamische Betriebszustände berücksichtigen. Nach dem Stand der Technik gibt es dazu unterschiedliche Typologien; Beispiele dafür sind in der US 2004/0207366 oder der US 2004/0165408 zu finden. Dabei wird die Zwischenkreisspannung auf einen nahezu konstanten Wert gehalten. Für die Festlegung dieses Wertes ist die maximale zulässige Ausgangsspannung der Gleichstromquelle ausschlaggebend, weil bis einschließlich dieses Wertes das maximale Tastverhältnis des Hochsetzers nicht erreicht werden darf. Ansonsten kann die Stromregelung des Hochsetzers den Entnahmestrom nicht mehr regeln oder es wird eine spannungsbedingte Stromreduktion verursacht.

Die Dokumente EP 0 947 904 A2 und US 2004/0151011 A1 legen ebenfalls Wechselrichter mit vorgeschaltetem Hochsetzer offen.

Aus der Vorgabe der konstanten Zwischenkreisspannung ergeben sich Nachteile für den Gesamtwirkungsgrad der aus Hochsetzer und Wechselrichter bestehenden Einheit. Der Hochsetzer weist dann den höchsten Wirkungsgrad auf, wenn er mit maximalem Tastverhältnis arbeitet. Im stationären Betriebszustand der Gleichstromquelle liegt das Tastverhältnis jedoch deutlich unter dem maximalen, da für dynamische Entnahmestromanstiege noch genug Spielraum vorzusehen ist.

Der Erfindung liegt daher die Aufgabe zugrunde, ein gegenüber dem Stand der Technik verbessertes Verfahren zum Betreiben eines Wechselrichters mit vorgeschaltetem Hochsetzer anzugeben.

Erfindungsgemäß wird diese Aufgabe durch ein Verfahren gelöst, das die im Patentanspruch 1 genannten Merkmale aufweist. Damit wird der Vorteil erreicht, dass bei stationärem Betriebszustand der Gleichstromquelle sowohl der Wechselrichter als auch der Hochsetzer im jeweils eigenen wirkungsgradoptimierten Arbeitsbereich arbeiten.

Eine vorteilhafte Ausprägung der Erfindung ist dann gegeben, wenn als optimale Zwischenkreisspannung die Eingangsspannung des Hochsetzers mal dem Übersetzungsverhältnis desselben abzüglich eines Sicherheitswertes von etwa 30% des mittleren Eingangsspannungsbereichswertes des Wechselrichters vorgegeben wird und wenn als oberer Grenzwert der Zwischenkreisspannung ($U_{DCW}$) der oberste Eingangsspannungsbereichswert des Wechselrichters (W)und als unterer Grenzwert der Zwischenkreisspannung ($U_{DCW}$) der unterste Eingangsspannungsbereichswert des Wechselrichters (W) vorgegeben wird.

Weiters ist es vorteilhaft, wenn eine Herabsetzung der Zwischenkreisspannung auf etwa 90% des aktuellen Wertes erfolgt, wenn der aktuelle Wert der Zwischenkreisspannung über einem Schwellwert liegt, der wiederum bei 90% des oberen Spannungsgrenzwertes des wirkungsgradoptimierten Arbeitsbereiches des Wechselrichters liegt und die Entnahmestromvorgabe der Gleichstromquelle über 125% des aktuellen Entnahmestroms liegt und
der aktuelle Entnahmestrom sich dem als interne Strombegrenzung der Gleichspannungsquelle festgelegten maximalen Entnahmestrom annähert. Damit wird erreicht, dass der Hochsetzer trotz eines starken Entnahmestromanstiegs seine Regeldynamik behält und nicht in den Zustand des maximalen Tastverhältnisses kommt.

Entspricht durch Nachregelung des Hochsetzers der aktuelle Entnahmestrom dann wieder der Entnahmestromvorgabe der Gleichstromquelle, erfolgt eine schrittweise Annäherung an die optimale Zwischenkreisspannung, bei der der Hochsetzer im wirkungsgradoptimierten Bereich arbeitet. Dabei wird nach jedem Annäherungsschritt geprüft, ob die optimale Zwischenkreisspannung schon erreicht ist und ob nicht infolge einer weiterhin dynamischen Entnahmestromvorgabe die oben angegebenen Bedingungen für eine erneute Herabsetzung der Zwischenkreisspannung wieder gegeben sind.

Zur Durchführung dieser Verfahren zur Regelung der Zwischenkreisspannung ist eine Anordnung vorgesehen, bei der der Wechselrichter ausgangsseitig an eine Last oder ein Wechselspannungsnetz anschließbar ist und eingangsseitig über einen Hochsetzer an eine Gleichstromquelle angeschlossen ist. Eine vorteilhafte Ausführung dieser Anordnung erhält man mit einem Hochsetzer in potenzialgetrennter Ausführung, der beispielsweise einen Planartransformator aufweist. Diese Hochsetzer sind sehr gut für hohe Übersetzungsverhältnisse zwischen Eingangs- und Ausgangsspannung geeignet.

Besonders gut geeignet ist das Verfahren für den Anschluss von Brennstoffzellen, Photovoltaikzellen, Batterien, Akkumulatoren, Gleichstromgeneratoren oder ähnliches an eine Last oder ein Wechselstromnetz. Bei diesen Gleichstromquellen können die Entnahmeströme stark variieren und es besteht eine deutliche Abhängigkeit zwischen Entnahmestrom und Spannung. Durch die erfindungsgemäße Regelung der Zwischenkreisspannung wird trotz dieser dynamischen Vorgänge in der Gleichstromquelle ein hoher Wirkungsgrad der Hochsetzer-Wechselrichter-Einheit erreicht.

Des Weiteren empfiehlt es sich, in die Anordnung eine Steuereinheit zu integrieren, die zur Regelung des Wechselrichters und des Hochsetzers ausgebildet ist, wobei diese Steuereinheit einen Mikroprozessor aufweist. Dabei wird beispielsweise ein DSP (Digital Signal Prozessor) eingesetzt, der aus den aktuellen Strom- und Spannungswerten die Sollwerte zur Regelung des Hochsetzers und des Wechselrichters errechnet.

Die Erfindung wird anhand von Figuren und eines Ausführungsbeispiels näher erläutert. Es zeigen beispielhaft:

Fig. 1:    eine schematische Darstellung der Anordnung

Fig. 2:    den Verlauf der optimalen Zwischenkreisspannung über der Spannung einer Gleichstromquelle G

Fig. 3:    den Verlauf des maximalen Stromsollwertes $I_{Soll\_max}$ über der Spannung einer Gleichstromquelle G

Fig. 4:    die Kennlinie eines Brennstoffzellensimulators

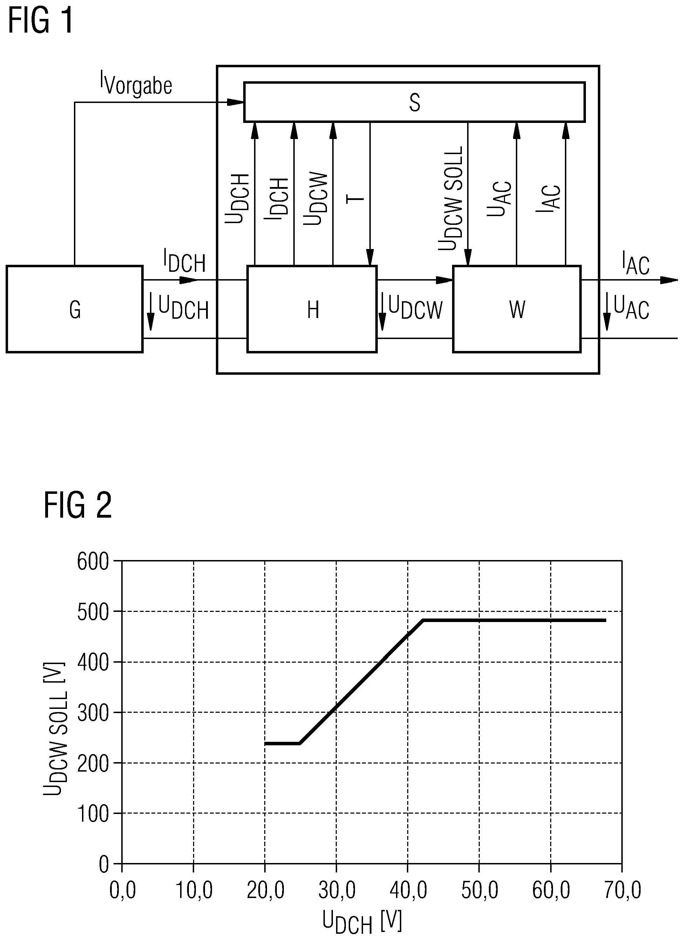

In Fig. 1 ist die erfindungsgemäße Anordnung des Hochsetzers H, des Wechselrichters W mit der Steuereinheit S und die angeschlossene Gleichstromquelle G dargestellt. Die Gleichstromquelle G ist beispielsweise eine Brennstoffzelle, an deren Ausgang eine Gleichspannung $U_{DCH}$ vorliegt. Der Hochsetzer H ist vorzugsweise in potentialgetrennter Ausführung vorliegend und liefert am Ausgang die Zwischenkreisspannung $U_{DCW}$, die sich aus der Spannung $U_{DCH}$ der Gleichstromquelle mal dem Übersetzungsverhältnisses N eines im Hochsetzer H wirkenden Planartransformators ergibt (z.B. N=14).

Beim Hochlauf wird dem Wechselrichter W vorgegeben, dass die Zwischenkreisspannung $U_{DCW}$ vom Wechselrichter W auf den oberen Grenzwert des wirkungsgradoptimierten Betriebsbereiches des Wechselrichters W gehalten werden soll. In Fig. 2 ist dieser Wert beispielsweise bei 480V als Gerade parallel zur Abszisse eingezeichnet. Fig. 2 ist dabei eine beispielhafte Vorgabe der optimalen Zwischenkreisspannung $U_{DCW Soll}$ über der Spannung $U_{DCH}$ einer Brennstoffzelle. Bis zu einer Spannung $U_{DCH}$ der Brennstoffzelle von etwa 25V verläuft die Zwischenkreisspannung konstant auf einem unteren Grenzwert $U_{DCW\_Soll\_min}$ = 240V. Dann erfolgt ein linearer Anstieg bis zum oberen Grenzwert $U_{DCW\_Soll\_max}$ = 480V. Die Grenzwerte $U_{DCW\_Soll\_min}$ und $U_{DCW\_Soll\_max}$ begrenzen dabei jenen Bereich, in dem der Wechselrichter W wirkungsgradoptimiert arbeitet und werden durch die Bauart und die Bauteile des Wechselrichters W bestimmt.

Der Hochsetzer H arbeitet im stromgeregelten Betrieb. Bei steigendem Strom des Hochsetzers H verringert sich gleichzeitig die Spannung $U_{DCH}$ der Gleichstromquelle G. Dadurch vergrößert sich das Tastverhältnis T des Hochsetzers H. Ab einer bestimmten Entnahmespannung $U_{DCH}$ erreicht der Hochsetzer H teilweise den Vollblockbetrieb und die Stromregelung ist nicht mehr gewährleistet. In Fig. 2 ist dieser Wert beispielhaft bei 42 V dargestellt.

Damit der Stromregler des Hochsetzers H den Strom weiterhin regeln kann, wird die Zwischenkreisspannung $U_{DCW}$ vom Wechselrichter W herabgesetzt. Der Sollwert der Zwischenkreisspannung $U_{DCW\_Soll}$ ergibt sich dann aus der Formel:

$$U_{DCW\_Soll} = U_{DCH} * N - S_U \hspace{3cm} (1)$$

Dabei ist N das Übersetzungsverhältnis des Hochsetzers H und $S_U$ ein Sicherheitswert, der beispielhaft in der Größenordnung von etwa 30% des mittleren Eingangsspannungsbereichswertes des Wechselrichters W liegt. In Fig. 2 entspricht dieser Eingangsspannungsbereichswert dem optimalen Sollwert der Zwischenkreisspannung $U_{DCW\_Soll}$ und liegt beispielsweise zwischen den Grenzen $U_{DCW\_Soll\_min}$ = 240V und $U_{DCW\_Soll\_max}$ = 480V. Der mittlere Eingangsspannungsbereichswert liegt dann bei 360V, so dass ein Sicherheitswert $S_U$ von etwa 100V angenommen werden kann.

Der Sicherheitswert $S_U$ wird wegen der Todzeit und einer Regelreserve des Spannungsreglers des Wechselrichters W abgezogen, weil dieser Spannungsregler wegen der AC-seitigen Leistungspulsation sehr träge eingestellt ist.

Nach dem Hochfahren ist für den Sollwert der Zwischenkreisspannung $U_{DCW\_Soll}$ ein Schwellwert $U_{DCW\_Schwelle}$ festgelegt, der etwa 10% unter dem oberen Grenzwert $U_{DCW\_Soll\_max}$ liegt (beispielhaft 430V). Eine Absenkung des Sollwertes der Zwischenkreisspannung $U_{DCW\_Soll}$ erfolgt dann unter folgenden Bedingungen:

-    der aktuelle Sollwert der Zwischenkreisspannung $U_{DCW\_Soll}$ liegt über dem Schwellwert $U_{DCW\_Schwelle}$

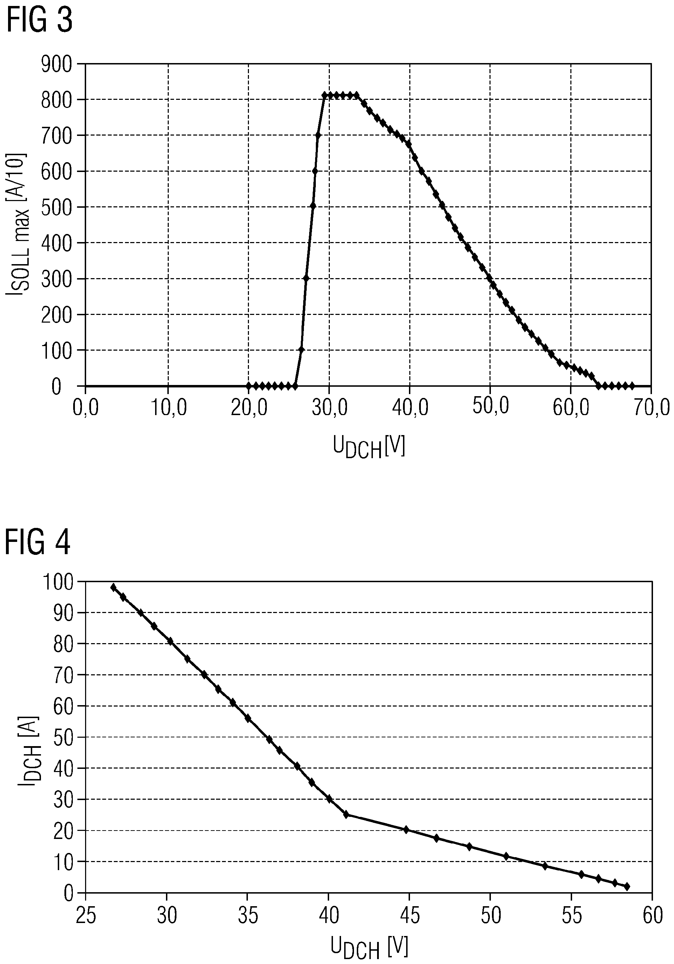

- der Anstieg der Entnahmestromvorgabe $I_{Vorgabe}$, der von der Gleichstromquelle G (beispielsweise von einer Brennstoffzellenregelung) vorgegeben wird, ist größer 25% des aktuellen Entnahmestromes $I_{Soll}$ zuzüglich eines Sicherheitswertes $S_{I1}$. Der aktuelle Entnahmestrom $I_{Soll}$ ist dabei der Wert, der aktuell in der Stromregelung des Hochsetzers H als Sollwert vorgegeben und mit einer festgelegten Dynamik (z.B. 10A/s bis zu einem Leistungsbereich von 2200W und 3,3A/s über einem Leistungsbereich von 2200W) der Entnahmestromvorgabe $I_{Vorgabe}$ nachgeführt wird. Der gemessene aktuelle Entnahmestromwert ist $I_{DCH}$, der dem Sollwert $I_{Soll}$ im Regler entspricht. Der Sicherheitswert $S_{I1}$ berücksichtigt Betriebszustände mit geringen Stromwerten, bei denen ein Vergleich der prozentuellen Differenzwerte ein zu spätes Ansprechen der Regelung bewirken würde. Der Sicherheitswert $S_{I1}$ hat die Größenordnung von 1,2% des maximal möglichen Entnahmestromes der Gleichstromquelle G (bei der in Fig. 4 dargestellten Kennlinie einer simulierten Brennstoffzelle beträgt der maximal mögliche Entnahmestrom der Gleichstromquelle G etwa 100A, der Sicherheitswert $S_{I1}$ ist dann etwa 1,2A)
- der aktuelle Entnahmestromes $I_{Soll}$ ist um einen Sicherheitswert $S_{I2}$ kleiner als der maximale Entnahmestrom $U_{Soll\_max}$. Der maximale Entnahmestrom $I_{Soll\_max}$ ist dabei von der aktuellen Spannung $U_{DCH}$ der Gleichstromquelle G abhängig und ist als interne Strombegrenzung der Gleichstromquelle G festgelegt. Ein beispielhafter Verlauf des maximalen Entnahmestromes $I_{Soll\_max}$ ist in Fig. 3 für eine Brennstoffzelle dargestellt. $I_{Soll\_max}$ ist bis zu einer Brennstoffzellenspannung $U_{DCH}$ von ca. 26V gleich Null und steigt dann bis ca. 29V Brennstoffzellenspannung $U_{DCH}$ steil auf etwa 81A an, um dann wieder annähernd kontinuierlich bis ca. 63V Brennstoffzellenspannung $U_{DCH}$ auf Null abzusinken. Der Sicherheitswert $S_{I2}$ bewirkt, dass noch vor Erreichen der internen Strombegrenzung der Gleichstromquelle G eine Absenkung des Sollwertes der Zwischenkreisspannung $U_{DCW\_Soll}$ erfolgt. Der Sicherheitswert $S_{I2}$ kann mit 2,5% des höchsten maximalen Stromsollwertes $I_{Soll\_max}$ angenommen werden, im beispielhaften Fall etwa 2,1A.

Die Spannungsreduktion wird demnach nach folgenden Bedingungen durchgeführt:

$$U_{DCW} > U_{DCW\_Schwelle} \quad \text{und}$$
$$I_{Vorgabe} > 1,25 * I_{Soll} + S_{I1} \quad \text{und}$$
$$I_{Soll} < I_{Soll\_max} - S_{I2} \tag{2}$$

Die Spannungsreduktion erfolgt nach folgender Formel:

$$U_{DCW\_Soll} = (U_{DCH} * N - S_U) * 0,9 \tag{3}$$

Die Spannungserhöhung wird anschließend erst wieder durchgeführt, wenn der Wert des Entnahmestroms $I_{Soll}$ den Wert der Entnahmestromvorgabe $I_{Vorgabe}$ erreicht. Die Anhebung erfolgt dann beispielhaft nach folgenden Schritten:
Für mindestens 1,5 Sekunden gilt:

$$U_{DCW} < (U_{DCH} * N - S_U) * 0,9 + 25\ V \tag{4}$$

Dann wird der Zwischenkreisspannungssollwert $U_{DCW\_Soll}$ auf 94% erhöht:

$$U_{DCW\_Soll} = (U_{DCH} * N - S_U) * 0,94 \tag{5}$$

Für mindestens 1,5 Sekunden gilt:

$$U_{DCW} < (U_{DCH} * N - S_U) * 0,94 + 25\ V \tag{6}$$

Dann wird der Zwischenkreisspannungssollwert $U_{DCW\_Soll}$ auf 98% erhöht:

$$U_{DCW\_Soll} = (U_{DCH} * N - S_U) * 0,98 \tag{7}$$

Für mindestens 1,5 Sekunden gilt:

$$U_{DCW} < (U_{DCH} * N - S_U) * 0,98 + 25 \text{ V} \qquad (8)$$

Dann wird der Zwischenkreisspannungssollwert $U_{DCW\_Soll}$ auf 100% erhöht und es gilt wieder Formel (1). Wenn innerhalb der Schritte (4) bis (8) die Bedingung (2) erfüllt ist, wird zum Schritt (3) zurückgesprungen.

**Patentansprüche**

1. Verfahren zum Betreiben eines Wechselrichters (W) mit einem über einen Zwischenkreis vorgeschalteten Hochsetzer (H), angeschlossen an eine Gleichstromquelle (G) mit sich ändernder Entnahmestromvorgabe ($I_{Vorgabe}$), wobei der Wechselrichter (W) und der Hochsetzer (H) jeweils einen eigenen wirkungsgradoptimierten Arbeitsbereich aufweisen, **dadurch gekennzeichnet, dass** bei einem Anstieg der Entnahmestromvorgabe ($I_{Vorgabe}$) und Annäherung des Hochsetzers (H) an einen Maximalwert des Tastverhältnisses (T) die Zwischenkreisspannung ($U_{DCW}$) herabgesetzt wird und dass bei Stabilisierung der Entnahmestromvorgabe ($I_{Vorgabe}$) die Zwischenkreisspannung ($U_{DCW}$) wieder angehoben wird.

2. Verfahren nach Anspruch 1, **dadurch gekennzeichnet, dass** als optimale Zwischenkreisspannung die Eingangsspannung ($U_{DCH}$) des Hochsetzers (H) mal dem Übersetzungsverhältnis desselben abzüglich eines Sicherheitswertes von etwa 30% des mittleren Eingangsspannungsbereichswertes des Wechselrichters (W) vorgegeben wird und dass als oberer Grenzwert der Zwischenkreisspannung ($U_{DCW}$) der oberste Eingangsspannungsbereichswert des Wechselrichters (W) und als unterer Grenzwert der Zwischenkreisspannung ($U_{DCW}$) der unterste Eingangsspannungsbereichswert des Wechselrichters (W) vorgegeben wird.

3. Verfahren nach Anspruch 1 oder 2, **dadurch gekennzeichnet, dass** die Zwischenkreisspannung ($U_{DCW}$) auf etwa 90% des aktuellen Wertes herabgesetzt wird, wenn folgende Bedingungen erfüllt sind:

   - der aktuelle Wert der Zwischenkreisspannung ($U_{DCW}$) liegt über einem Schwellwert, der wiederum bei etwa 90% des oberen Spannungsgrenzwerts des wirkungsgradoptimierten Arbeitsbereiches des Wechselrichters (W) liegt und
   - die Entnahmestromvorgabe ($I_{Vorgabe}$) der Gleichstromquelle liegt über 125% des aktuellen Entnahmestroms ($I_{Soll}$) und
   - der aktuelle Entnahmestrom ($I_{Soll}$) nähert sich dem als interne Strombegrenzung der Gleichspannungsquelle (G) festgelegten maximalen Entnahmestrom

   und dass die Zwischenkreisspannung ($U_{DCW}$) wieder schrittweise angehoben wird, wenn:

   - der aktuelle Wert der Zwischenkreisspannung ($U_{DCW}$) unter der optimalen Zwischenkreisspannung liegt,
   - der aktuelle Entnahmestrom ($I_{Soll}$) der Entnahmestromvorgabe ($I_{Vorgabe}$) entspricht und
   - wenn die oben angegebenen Bedingungen für eine Herabsetzung der Zwischenkreisspannung ($U_{DCW}$) nicht erfüllt werden.

4. Anordnung mit einem Wechselrichter (W), der ausgangsseitig an eine Last oder ein Wechselspannungsnetz angeschlossen ist und eingangsseitig über einen über einen Zwischenkreis vorgeschalteten Hochsetzer (H) an eine Gleichstromquelle angeschlossen ist, **dadurch gekennzeichnet, dass** die Anordnung zur Durchführung der Verfahren nach einem der Ansprüche 1 bis 3 eingerichtet ist, wobei Mittel zum Herabsetzen einer Zwischenkreisspannung ($U_{DCW}$) bei einem Anstieg der Entnahmestromvorgabe ($I_{Vorgabe}$) und Annäherung des Hochsetzers (H) an einen Maximalwert des Tastverhältnisses sowie Mittel zum Anheben der Zwischenkreisspannung ($U_{DCW}$) bei Stabilisierung der Entnahmestromvorgabe ($I_{Vorgabe}$) vorgesehen sind.

5. Anordnung nach Anspruch 4, **dadurch gekennzeichnet, dass** der Hochsetzer (H) in potenzialgetrennter Ausführung ausgebildet ist.

6. Anordnung nach Anspruch 4 oder 5, **dadurch gekennzeichnet, dass** die Gleichstromquelle (G) eine Brennstoffzelle, eine Photovoltaikzelle, eine Batterie, ein Akkumulator, ein Gleichstromgenerator oder ähnliches ist.

7. Anordnung nach einen der Ansprüchen 4 bis 6, **dadurch gekennzeichnet, dass** die Anordnung eine Steuereinheit (S) umfasst, die zur Regelung des Wechselrichters (W) und des Hochsetzers (H) ausgebildet ist.

8. Anordnung nach Anspruch 7, **dadurch gekennzeichnet, dass** die Steuereinheit (S) einen Mikroprozessor aufweist.

**Claims**

1. Method for operating an inverter (W) having a step-up device (H), connected upstream via a direct current link, that is connected to a direct current source (G) having a varying specified draw current ($I_{spec}$), with the inverter (W) and step-up device (H) each having their own efficiency-optimised operating range, **characterised in that** the direct current link voltage ($U_{DCW}$) will be decreased when the specified draw current ($I_{spec}$) rises and the step-up device (H) approaches a maximum value of the pulse duty factor (T) and **in that** the direct current link voltage ($U_{DCW}$) will be raised again upon stabilising of the specified draw current ($I_{spec}$).

2. Method according to claim 1, **characterised in that** the input voltage ($U_{DCH}$) of the step-up device (H) times its transformation ratio minus a safety value of around 30% of the mean input voltage range value of the inverter (W) is specified as the optimum direct current link voltage and **in that** the uppermost and lowermost input voltage range value of the inverter (W) are specified respectively as being the upper limiting value of the direct current link voltage ($U_{DCW}$) and its lower limiting value.

3. Method according to claim 1 or 2, **characterised in that** the direct current link voltage ($U_{DCW}$) will be decreased to around 90% of the present value if the following conditions have been met:

- the present value of the direct current link voltage ($U_{DCW}$) exceeds a threshold which is in turn around 90% of the upper voltage limiting value of the efficiency-optimised operating range of the inverter (W), and
- the specified draw current ($I_{spec}$) of the direct current source exceeds 125% of the present draw current ($I_{setpoint}$), and
- the present draw current ($I_{setpoint}$) is approaching the maximum draw current specified as the internal current limitation of the direct voltage source (G)

and **in that** the direct current link voltage ($U_{DCW}$) will again be raised step-by-step if:

- the present value of the direct current link voltage ($U_{DCW}$) is below the optimum direct current link voltage,
- the present draw current ($I_{setpoint}$) corresponds to the specified draw current ($I_{spec}$), and
- if the aforementioned conditions for decreasing the direct current link voltage ($U_{DCW}$) are not met.

4. Arrangement with an inverter (W) that is connected at its output side to a load or alternating current system and at its input side to a direct current source via a step-up device (H) connected upstream via a direct current link, **characterised in that** the arrangement is configured for implementing the methods according to one of claims 1 to 3, wherein there is provision for means for decreasing a direct current link voltage ($U_{DCW}$) when the specified draw current ($I_{spec}$) increases and the step-up device (H) approaches a maximum value of the pulse duty factor and for means for raising the direct current link voltage ($U_{DCW}$) when the specified draw current ($I_{spec}$) stabilises.

5. Arrangement according to claim 4, **characterised in that** the step-up device (H) is embodied as being of isolated design.

6. Arrangement according to claim 4 or 5, **characterised in that** the direct current source (G) is a fuel cell, a photovoltaic cell, a battery, an accumulator, a direct current generator, or suchlike.

7. Arrangement according to one of claims 4 to 6, **characterised in that** the arrangement includes a control unit (S) embodied for controlling the inverter (W) and step-up device (H).

8. Arrangement according to claim 7, **characterised in that** the control unit (S) has a microprocessor.

**Revendications**

1. Procédé pour faire fonctionner un onduleur (W) avec un élévateur (H) connecté en amont via un circuit intermédiaire, l'onduleur étant connecté via ces éléments à une source de courant continu (G) ayant une consigne de prélèvement de courant ($I_{Vorgabe}$) variable, selon lequel l'onduleur (W) et l'élévateur (H) ont chacun une propre plage de fonctionnement à rendement optimal,
caractérisé en ce qu'en cas d'augmentation de la consigne de prélèvement de courant ($I_{Vorgabe}$) et d'une approche par l'élévateur (H) d'une valeur maximale du cycle d'utilisation (T), la tension du circuit intermédiaire ($U_{DCW}$) est diminuée et qu'en cas de stabilisation de la consigne de prélèvement de courant ($I_{Vorgabe}$), la tension du circuit intermédiaire ($U_{DCW}$) est à nouveau relevée.

2. Procédé selon la revendication 1, caractérisé en ce que la tension optimale du circuit intermédiaire est définie par la tension d'entrée ($U_{DCH}$) de l'élévateur (H) multipliée par le rapport de transmission de celui-ci moins un facteur de sécurité d'environ 30 % de la valeur de la plage de tension d'entrée moyenne de l'onduleur (W) et la valeur limite supérieure de la tension du circuit intermédiaire ($U_{DCW}$) est définie par la valeur la plus élevée de la plage de tension d'entrée de l'onduleur (W) et la valeur limite inférieure de la tension du circuit intermédiaire ($U_{DCW}$) est définie par la valeur la plus basse de la plage de tension d'entrée de l'onduleur (W).

3. Procédé selon la revendication 1 ou 2, caractérisé en ce que la tension du circuit intermédiaire ($U_{DCW}$) est diminuée à environ 90 % de la valeur instantanée lorsque les conditions suivantes sont satisfaites :

   - la valeur en cours de la tension du circuit intermédiaire ($U_{DCW}$) est supérieure à une valeur seuil, qui à son tour est d'environ 90 % de la valeur limite maximale de tension de la plage de fonctionnement à rendement optimal de l'onduleur (W), et
   - la consigne de prélèvement de courant ($I_{Vorgabe}$) de la source de courant continu est supérieure à 125 % du courant prélevé instantané ($I_{Soll}$) et
   - le courant prélevé instantanément ($I_{Soll}$) s'approche du courant prélevé maximal défini comme la limitation de courant interne de la source de tension continue (G),

   et en ce que la tension du circuit intermédiaire ($U_{DCW}$) est de nouveau relevée progressivement lorsque :

   - la valeur instantanée de la tension du circuit intermédiaire ($U_{DCW}$) est inférieure à la tension optimale du circuit intermédiaire,
   - le courant prélevé instantané ($I_{Soll}$) correspond à la consigne de prélèvement de courant ($I_{Vorgabe}$) et
   - les conditions indiquées ci-dessus pour une diminution de la tension du circuit intermédiaire ($U_{DCW}$) ne sont pas satisfaites.

4. Agencement comprenant un onduleur (W) qui est connecté du côté sortie à une charge ou à un réseau de tension alternative, et qui est connecté du côté entrée à une source de courant continu via un élévateur (H) connecté en amont via un circuit intermédiaire,
caractérisé en ce que l'agencement est conçu pour exécuter le procédé selon l'une des revendications 1 à 3, dans lequel des moyens servant à diminuer une tension du circuit intermédiaire ($U_{DCW}$) lors d'une augmentation de la consigne de prélèvement de courant ($I_{Vorgabe}$) et d'une approche par l'élévateur (H) d'une valeur maximale du cycle d'utilisation sont prévus ainsi que des moyens pour relever la tension du circuit intermédiaire ($U_{DCW}$) en cas de stabilisation de la consigne de prélèvement de courant ($I_{Vorgabe}$).

5. Agencement selon la revendication 4, caractérisé en ce que l'élévateur (H) est conçu dans une réalisation à potentiels séparés.

6. Agencement selon la revendication 4 ou 5, caractérisé en ce que la source de courant continue (G) est une pile à combustible, une cellule photovoltaïque, une batterie, un accumulateur, un générateur de courant continu ou similaire.

7. Agencement selon l'une des revendications 4 à 6, caractérisé en ce que l'agencement comprend une unité de commande (S) qui est agencée pour réguler l'onduleur (W) et l'élévateur (H).

8. Agencement selon la revendication 7, caractérisé en ce que l'unité de commande (S) comprend un microprocesseur.

# FIG 1

# FIG 2

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040207366 A
- US 20040165408 A
- EP 0947904 A2
- US 20040151011 A1